# EUROPEAN PATENT APPLICATION

(11) **EP 3 425 593 A1**
(43) Date of publication of application: **09.01.2019**
(21) Application number: 18159828.5
(22) Date of filing: 02.03.2018
(51) Int. Cl.: G06T 17/20

(54) **HIGHLY PARALLELIZABLE ALGORITHM FOR DETECTING INTERSECTIONS OF SHAPES**

(30) Priority: 25.04.2017 US 201715496636
(71) Applicant: Spatial Corporation, Broomfield, CO 80021 (US)
(72) Inventor: PODOPLELOV, Andrei, Erie, CO 80516 (US)
(74) Representative: Bandpay & Greuter

(57) **Abstract**

Methods and systems for determining intersections among a plurality of two-dimensional (2D) real-world shapes. The shapes may be represented by data and may be provided as input or be generated by some embodiments. The shapes (and/or data) may include segments of the 2D real-world shapes having start point and end point vertices. A plurality of reference lines are defined. Each reference line intersects at least one of the vertices along a given axis. The reference lines are processed in parallel by classifying the vertices of the two-dimensional (2D) real-world shapes along the reference lines. Based on the classifying, it is determined whether any of the vertices of the two-dimensional (2D) real-world shapes along the reference lines are part of a real-world shape that intersects another of the two-dimensional (2D) real-world shapes.

## Description

### BACKGROUND

In real-world applications that involve two (or three or more) dimensional modeling, such as simulations of physical structures, physical properties, robotics, graphics, and image processing, it is often desirable to determine whether two or more objects intersect with each other (e.g., collide). Methods exist for detecting such intersections, known as clipping, collision detection, and detection of intersections of shapes. However, existing methods for two dimensional polygons are not suitable for parallelization, and do not take advantage of modern processing units (PUs), such as central processing unit (CPU) cores or graphics processing unit (GPU) threads.

### SUMMARY OF THE INVENTION

Efficient and reliable methods, systems, and apparatuses that overcome the limitations of existing systems by detecting intersections of shapes are presented. As described herein, intersection detection is defined as finding whether shapes are intersecting. An intersection may occur when a part of a shape lies inside of or touches another shape (e.g., overlaps with another shape).

Shapes may include, but are not limited to, one-dimensional (1D) straight lines, two-dimensional (2D) polygons (also known as "polygons" or "2D polygons" herein) including, but not limited to, convex or concave polygons, and/or other shapes. In some embodiments, polygons may include three or more substantially straight lines. In addition, according to other embodiments, polygons may include a single substantially straight line, two connected substantially straight lines, and/or three or more connected straight lines.

In some embodiments, the detection may be performed using parallelism. As a non-limiting example, according to some embodiments, the method (or system or apparatus) may perform parallel operations including, but not limited to, running a part and/or entire operation in parallel and independent of the same operation on other processing units (PUs).

In other embodiments, the detection may be performed in a serial manner. As part of the detection method (or system), according to some embodiments, the method (or system or apparatus) may enable parallel processing by not locking data in shared global datasets but rather using local datasets including parallel task data, and/or shared read-only data collections. A dataset may include, but is not limited to, a collection of shapes that may be used to check for intersections between shapes. A collection may include, but is not limited to, a dynamic array including homogeneous data, and/or other similar data structure.

According to some embodiments, the method (or system or apparatus) may include a pre-processing tool that may act as a validation technique of the input data before running lengthy analysis and/or modeling operations. According to some embodiments, the method (or system or apparatus) may produce (e.g., generate) a dataset that identifies one or more intersections between shapes.

Some embodiments may include a method (or corresponding system) that includes one or more of the steps of: inputting 2D shape related data, generating (or receiving) reference lines (also referred to as "scan lines" herein) based on input data, processing two or more reference lines in parallel, registering one or more crosspoints associated with the 2D shapes, and/or collecting corresponding results.

According to some embodiments, the method (and corresponding system) of intersection detection may include reference lines, crosspoints, intersection points, and/or scanners. In some embodiments, a reference line may be a vertical line (or substantially vertical line). A reference line may pass through at least one vertex (also referred to as "point" herein) of a shape in the dataset. In some embodiments, a reference line may be a horizontal line (or substantially horizontal line) instead of a vertical line, in which case the x (e.g., horizontal) and y (e.g., vertical) coordinates illustrated further herein may be swapped, without affecting functionality, results, or performance. A crosspoint is defined herein to include a vertex (also referred to as "point" or "cross point" herein) on the reference line, where the reference line crosses a segment. One or more crosspoints may be used as intermediate data in the method (or system) of some embodiments. As mentioned above, an intersection may occur when a part of a shape lies inside of or touches another shape (e.g., overlaps with another shape). As such, an intersection point is defined herein to include a point of a shape's intersection (with another shape), thereby indicating a touching or inclusion of another shape.

Embodiments include a methods (including, but not limited to, a computer-implemented method) and systems (including, but not limited to, a computer-implemented system) for determining intersections among a plurality of two-dimensional (2D) real-world shapes. The shapes may be represented by data, which may be provided as input in some embodiments. Other embodiments may generate the data.

The shapes (and/or data) may include segments of the 2D real-world shapes. Segments may include but are not limited to being a single edge (line) of a shape. The segments may have start point and/or end point vertices. According to some embodiments, an endpoint may be considered herein to refer to a beginning point or an end point of a segment. In some embodiments, the method (or corresponding system) may define a plurality of reference lines. Each reference line may intersect at least one of the vertices along a given axis. In some embodiments, the method (or corresponding system) may process the reference lines in parallel by classifying the vertices of the two-dimensional (2D) real-world shapes along the reference lines. In some embodiments, based on the classifying, the method (and corresponding system) may determine whether any of the vertices of the two-dimensional (2D) real-world shapes along the reference lines are part of a real-world shape that intersects with another of the two-dimensional (2D) real-world shapes.

According to some embodiments of the method (or corresponding system), the two-dimensional (2D) real-world shapes may include real-world polygons. In addition, the real-world shape that intersects may be inside of or touching another of the two-dimensional (2D) real-world shapes. In some embodiments, the two-dimensional (2D) real-world shapes may be components of at least one of: printed circuit boards and digital computer images. For non-limiting example, some embodiments may be applied to 2D modeling, analysis, games, electronic design automation (EDA) applications for printed circuit boards (PCBs), image recognition, computer vision, and/or augmented reality.

In some embodiments, the method (or corresponding system) may classify the vertices of the two-dimensional (2D) real-world shapes along the reference lines. In some embodiments, the method (or corresponding system) may determine, for each vertex along a given reference line, whether the segments associated with the vertex are crossing, touching, and/or following the reference line by comparing locations of the reference line and the start point and end point vertices of the segments.

Some embodiments of the method (or corresponding system) may determine whether any of the vertices of the two-dimensional (2D) real-world shapes along the reference lines that are the part of a real-world shape intersect the another of the two-dimensional (2D) real-world shapes. Some embodiments of the method (or corresponding system) may include additional steps (method) and/or system functions (system) that are optionally implemented in computer hardware (and/or software). As such, some embodiments may determine whether a plurality of the segments overlap, and/or further determine whether a plurality of the segments of different shapes of the two-dimensional (2D) real-world shapes overlap, and/or further determine whether an endpoint vertex of a given segment of the segments lies inside of the another of the two-dimensional (2D) real-world shapes, and/or further determine whether an endpoint vertex of a given segment of the segments lies on the another of the two-dimensional (2D) real-world shapes.

According to some embodiments of the method (or corresponding system), the given axis may be a horizontal (x) axis or a vertical (y) axis. According to some embodiments of the method (and corresponding system) may determine whether any of the vertices of the two-dimensional (2D) real-world shapes along the reference lines are part of a real-world shape that intersects another of the two-dimensional (2D) real-world shapes. Some embodiments of the method (or corresponding system) may determine whether each segment of the segments connected to each reference line of the reference lines is crossing, touching, and/or following each reference line.

Some embodiments of the systems or methods may determine whether any of the vertices of the two-dimensional (2D) real-world shapes along the reference lines that are part of a real-world shape that intersect the another of the two-dimensional (2D) real-world shapes is based upon a priority order. In such a priority order, the priority of type "following" may be considered to be higher priority than the priorities of type "crossing" and "touching" (in reference to crossing, touching, or following the reference line).

Some embodiments may include a computer system for determining intersections among a plurality of two-dimensional (2D) real-world shapes. The system includes a plurality of processors and memory. The memory may include (i) computer code instructions stored thereon and/or (ii) data representing the two-dimensional (2D) real-world shapes. The data may include segments including portions of the two-dimensional (2D) real-world shapes. The segments may represent start point and end point vertices of the portions of the two-dimensional (2D) real-world shapes. The memory may be operatively coupled to the plurality of processors such that, when executed by the plurality of processors, the computer code instructions may cause the computer system to implement a computing module configured to perform one or more functions. The computing module may define a plurality of reference lines. Each reference line may intersect at least one of the vertices along a given axis. The computing module may process the reference lines in parallel by classifying the vertices of the two-dimensional (2D) real-world shapes along the reference lines. The computing module may determine, based on the classifying, whether any of the vertices of the two-dimensional (2D) real-world shapes along the reference lines are part of a real-world shape that intersect another of the two-dimensional (2D) real-world shapes.

In embodiments of the system, each processor may process a subset of the reference lines. The segments may be stored as read-only in the memory. The two-dimensional (2D) real-world shapes may include real-world polygons. The real-world shape may be inside of or touching another of the two-dimensional (2D) real-world shapes. The two-dimensional (2D) real-world shapes may be components of at least one of: printed circuit boards and digital computer images. In embodiments of the system, classifying the vertices of the two-dimensional (2D) real-world shapes along the reference lines may include: determining, for each vertex along a given reference line, whether the segments associated with the vertex are crossing, touching, or following the reference line by comparing locations of the reference line and the start point and end point vertices of the segments.

In some embodiments of the system, the computing module may be further configured to determine whether any of the vertices of the two-dimensional (2D) real-world shapes along the reference lines that are the part of a real-world shape intersect another of the two-dimensional (2D) real-world shapes. The computing module may determine whether a plurality of the segments overlap (e.g., with each other). The computing module may determine whether a plurality of the segments of different shapes of the two-dimensional (2D) real-world shapes overlap. The computing module may determine whether an endpoint vertex of a given segment of the segments lies inside of another of the two-dimensional (2D) real-world shapes. The computing module may determine whether an endpoint vertex of a given segment of the segments lies on the other of the two-dimensional (2D) real-world shapes.

According to some embodiments of the system, the given axis may be a horizontal axis or a vertical axis. According to some embodiments, the computing module may be further configured to determine whether any of the vertices of the two-dimensional (2D) real-world shapes along the reference lines are part of a real-world shape that intersect the another of the two-dimensional (2D) real-world shapes. The computing module may determine whether each segment of the segments connected to each reference line of the reference lines is crossing, touching, or following each reference line.

According to some embodiments of the system, the computing module may be further configured to determine whether any of the vertices of the two-dimensional (2D) real-world shapes along the reference lines are part of a real-world shape that intersect the another of the two-dimensional (2D) real-world shapes, based upon a priority order. In such a priority order, the priority of type "following" may be considered to be higher priority than the priorities of type "crossing" and "touching" (in reference to crossing, touching, or following the reference line).

Some embodiments are directed to a non-transitory computer readable medium having stored thereon a sequence of instructions which, when loaded and executed by a processor coupled to an apparatus, may cause the apparatus to: define a plurality of reference lines, each reference line intersecting at least one of start point and end point vertices of segments representing portions of two-dimensional (2D) real-world shapes; process the reference lines in parallel by classifying the vertices of the two-dimensional (2D) real-world shapes along the reference lines; and determine, based on the classifying, whether any of the vertices of the two-dimensional (2D) real-world shapes along the reference lines are part of a real-world shape that intersect another of the two-dimensional (2D) real-world shapes.

### BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
FIG. 1 is a flowchart of an example method (or part of an apparatus or system) directed to detecting one or more intersections between shapes, according to some embodiments.
FIG. 2 illustrates detection of intersection between shapes, according to some embodiments.
FIG. 3 illustrates a reference line, multiple corresponding segments, as part of crosspoint determination, according to some embodiments.
FIG. 4 illustrates multiple reference lines, and processing of vertices in parallel, according to some embodiments.
FIG. 5 illustrates a computer network (or apparatus, or system) or similar digital processing environment, according to some embodiments.
FIG. 6 illustrates a diagram of an example internal structure of a computer (e.g., client processor/device or server computers) in the computer system (and apparatus) of FIG. 5, according to some embodiments.

### DETAILED DESCRIPTION OF THE INVENTION

A description of example embodiments of the invention follows.

Algorithms exist for polygon intersection (also called "clipping" and "collision detection") in two dimensions (2D). The nature of polygons in electronic design automation, or EDA (like a printed circuit board, or PCB) is complex convex-concave form, so well-known algorithms that accepting convex polygons may not be applicable. Such existing algorithms may include, but are not limited to, Bounding Shapes (e.g., box, circle), Quick Hull, Spatial Partitioning (including but not limited to Quadtrees), the Separating Axis Theorem, Scan and Prune (also known as Sort and Scan).

Other existing algorithms, that may accept both convex and concave polygons, may have other limitations. However, in stark contrast to existing algorithms, the disclosed embodiments do not suffer from these limitations (i.e., embodiments are not so limited). For example, the Bentley-Ottmann algorithm may have numerical limitations: no two line segment endpoints or crossings may have the same x-coordinate (vertical and near-vertical lines need special handling), no line segment endpoint may lie upon another line segment, no three line segments may intersect at a single point, however, in stark contrast, the embodiments presented herein are not so limited. The Greiner-Hormann clipping algorithm may not handle degeneracies, such as common edges or intersections exactly at a vertex, but some embodiments are not so limited.

The Weiler-Atherton algorithm may perform two polygon clipping, may be inefficient in multi-polygon tasks, and may need to be run for each pair of polygons, so N*(N-1)/2 combinations may be executed. The Sutherland-Hodgman algorithm may include clipping, and may not be robust with concavity. Functionally applicable algorithms may not perform well with multi-polygon tasks. For non-limiting example, the Vatti (a clipping algorithm), may define two polygons clipping, may be inefficient in multi-polygon tasks, and may need to be run for each pair of polygons. However, the embodiments presented herein are not so limited.

In addition, most existing algorithms for polygon intersection detection were developed in the 1970's, and may target single-CPU machines. As such, the majority of existing algorithms for polygon intersection detection are not employing modern multicore hardware. By contrast, some embodiments may employ modern multicore hardware and may target multi-CPU machines.

Unlike the embodiments presented herein, existing approaches suffer from performance issues. Existing approaches may employ global datasets, and are not intended to be used in a parallel fashion. As such, applying parallel execution to existing approaches may require locking of data structures. Considering how actively the global data used by such existing algorithms, existing algorithms may not scale well. As such, unlike the embodiments presented herein, existing approaches may be sequential, therefore not using modern CPU/GPU hardware, and may not be capable of reaching high performance.

In addition, unlike in the embodiments presented herein, in existing approaches, polygon self-intersections may not be supported. In addition, unlike in the embodiments presented herein, existing approaches may not handle degeneracies, such as common edges, or intersections at a vertex. Thus, embodiments overcome the above-mentioned deficiencies of existing approaches.

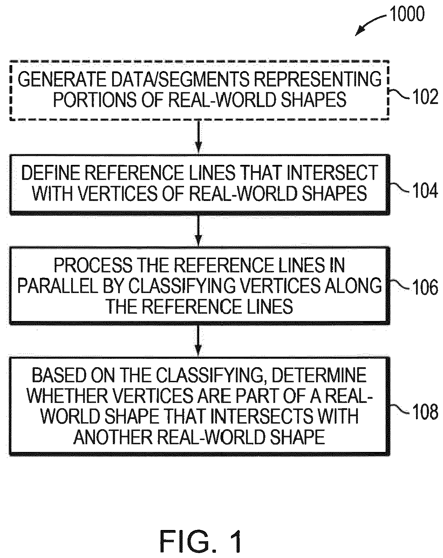

FIG. 1 is a flowchart of an example method (or part of an apparatus or system) 1000 directed to detecting one or more intersections between shapes, according to some embodiments. As such, FIG. 1 illustrates a method (or part of a corresponding system) 1000 of determining intersections among a plurality of two-dimensional (2D) real-world shapes, according to some embodiments. Some embodiments may include data representing the shapes. According to some embodiments, the data may be provided as input. Other embodiments may generate 102 the data.

The shapes (and/or data) may include segments of the 2D real-world shapes having start point and end point vertices. In some embodiments, the method (or corresponding system) 1000 may define 104 a plurality of reference lines. Each reference line may intersect at least one of the vertices along a given axis. In some embodiments, the method (or corresponding system) 1000 may process 106 the reference lines in parallel by classifying the vertices of the two-dimensional (2D) real-world shapes along the reference lines. In some embodiments, based on the classifying, the method (or corresponding system) 1000 may determine in parallel 108 whether any of the vertices of the two-dimensional (2D) real-world shapes along the reference lines are part of a real-world shape that intersects with another of the two-dimensional (2D) real-world shapes.

According to some embodiments of the method (or corresponding system) 1000, the two-dimensional (2D) real-world shapes may include real-world polygons. In addition, the real-world shape that intersects may be inside of or touching another of the two-dimensional (2D) real-world shapes. In some embodiments, the two-dimensional (2D) real-world shapes may be components of at least one of: printed circuit boards and digital computer images. For non-limiting example, some embodiments may be applied to 2D modeling, analysis, games, electronic design automation (EDA) applications for printed circuit boards (PCBs), image recognition, computer vision, and/or augmented reality.

In some embodiments, classifying the vertices of the two-dimensional (2D) real-world shapes along the reference lines may include determining, for each vertex along a given reference line, whether the segments associated with the vertex are crossing, touching, or following the reference line by comparing locations of the reference line and the start point and end point vertices of the segments.

Some embodiments of the method (or corresponding system) 1000 may determine whether any of the vertices of the two-dimensional (2D) real-world shapes along the reference lines that are the part of a real-world shape intersect the another of the two-dimensional (2D) real-world shapes. Some embodiments of the method (or corresponding system) 1000 may include additional steps (method) 1000 and/or system functions (system) 1000 that are optionally implemented in computer hardware (and/or software). As such, in some embodiments, the method (or corresponding system) 1000 may determine whether a plurality of the segments overlap. In some embodiments, the method (or corresponding system) 1000 may determine whether a plurality of the segments of different shapes of the two-dimensional (2D) real-world shapes overlap. In some embodiments, the method (and corresponding system) 1000 may determine whether an endpoint vertex of a given segment of the segments lies inside of the another of the two-dimensional (2D) real-world shapes. In some embodiments, the method (or corresponding system) 1000 may determine whether an endpoint vertex of a given segment of the segments lies on the other of the two-dimensional (2D) real-world shapes.

According to some embodiments of the method (or corresponding system) 1000, the given axis may be a horizontal (x) axis or a vertical (y) axis. According to some embodiments, the method (or corresponding system) 1000 may determine whether any of the vertices of the two-dimensional (2D) real-world shapes along the reference lines are part of a real-world shape that intersect the another of the two-dimensional (2D) real-world shapes. According to some embodiments, the method (or corresponding system) 1000 may determine whether each segment of the segments connected to each reference line of the reference lines is crossing, touching, and/or following each reference line.

According to some embodiments, the method (or corresponding system) 1000 may determine whether any of the vertices of the two-dimensional (2D) real-world shapes along the reference lines that are part of a real-world shape that intersect the other of the two-dimensional (2D) real-world shapes is based upon a priority order. In such a priority order, the priority of a vertex "following" the reference line may be considered to be higher priority than "crossing" or "touching" the reference line.

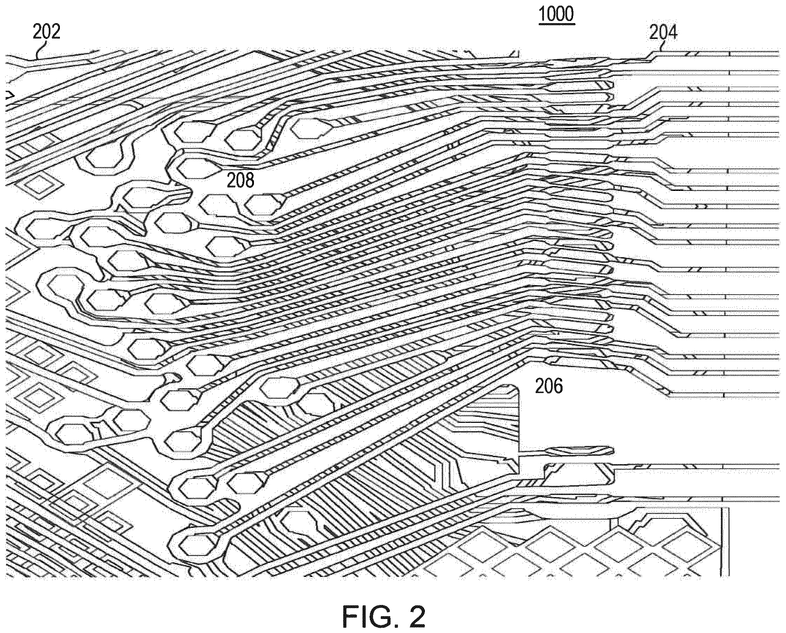

FIG. 2 illustrates detection of one or more intersections 206 between shapes (of layers 202, 204, respectively), according to some embodiments of the method (or system) 1000. As illustrated in FIG. 2, a fragment of typical printed circuit board (PCB) may mistakenly include two layers (202, 204, respectively). In FIG. 2, the circuits 208 may be represented by polygons. FIG. 2 is an example of complex invalid data.

Some embodiments include a computer-implemented algorithm (also referred to as "algorithm" herein) that may be included as part of the method (or system) 1000 and may be implemented in hardware and/or software on one or more computing devices. The algorithm may include one or more of the following phases (also known as functions, and/or steps): (1) reference line generation; (2) reference line processing; (3) results collection; (4) post-processing of results. Each of these phases (1-4) may be performed sequentially or in parallel. Some embodiments are as follows (regarding parallel and sequential operations): (1) reference line generation - sequential; (2) reference line processing - parallel or sequential; (3) results collection - sequential; (4) post-processing of results - parallel or sequential. Reference line processing (Phase 2) is preferably performed in parallel, but is not so limited.

In some embodiments, input data may be received (supplied) to the method (or system) 1000 including a collection of shapes that include segments (edges), each segment including two 2-dimensional (2D) endpoints, including a start point and an end point. In other embodiments, input data may be generated by the method (or system) 1000.

### Phase 1 - Reference line generation: (may be sequential, but not so limited)

In reference line generation, a collection of reference lines may be created. The collection of reference lines may comprise an array of unique numbers, representing x coordinates of endpoints. The following pseudo-code (Example 1) illustrates performing reference line generation:

### Example 1:

FOREACH input shape
   FOREACH segment in shape
      ADD x coordinates of both endpoints to reference lines collection
   ENDLOOP
ENDLOOP
REMOVE duplicates (according to some embodiments, sort the collection to accelerate this)

### Phase 2 - Reference line processing (preferably parallel, but not so limited)

In reference line processing, according to some embodiments, each reference line may be processed by a separate object referred herein as a "scanner," or "scanner object." Unlike existing approaches that use sequential scanning, the scanners of some embodiments may apply a parallel algorithm to process two or more reference lines in parallel, as described further herein to follow. For non-limiting example, according to some embodiments, one scanner (object) may be applied separately to each reference line.

According to some embodiments, data may be local. In some embodiments, local data may be applied to a single reference line, except as a shared read-only collection of segments. In other words, in some embodiments, an overall dataset may be subdivided into multiple local datasets. According to some embodiments, each local dataset may be written to by a single (given) scanner, rather than by other scanners.

Each given local dataset may include data corresponding to a given reference line (but not to the other reference lines and/or datasets). Given that each local dataset may be written to by a single (given) scanner, and preferably not by other scanners, reference lines may be processed in parallel without concerns of potential race conditions because each reference line may correspond to a different local dataset. As such, in some embodiments, the method (or system) 1000 may process reference lines in parallel without locking data or creating race conditions. In addition, some embodiments support and are tested with OpenMP (Open Multi-Processing), and/or PPL (Parallel Patterns Library).

In Phase 2 (reference line processing), according to some embodiments of the method (or system) 1000, a scanner may perform one or more of the following phases: (Phase 2.1) determining crosspoints; and (Phase 2.2) determining intersections between shapes. Associated algorithms for each of these functions are described to follow in reference to a single scanner. However, in some embodiments, these algorithms may also be applied to more than one scanner.

### Phase 2.1. Determining crosspoints:

As part of reference line processing, crosspoints may be determined including scanning and/or registering the crosspoints (also known herein as "crosspoint determination"). According to some embodiments, a crosspoint may include a point on the reference line, where the reference line crosses with, or touches one or more segments. According to some embodiments, crosspoints may be used as intermediate data (e.g., output from Phase 2.1 of crosspoint determination, and input to Phase 2.2 for determining intersections).

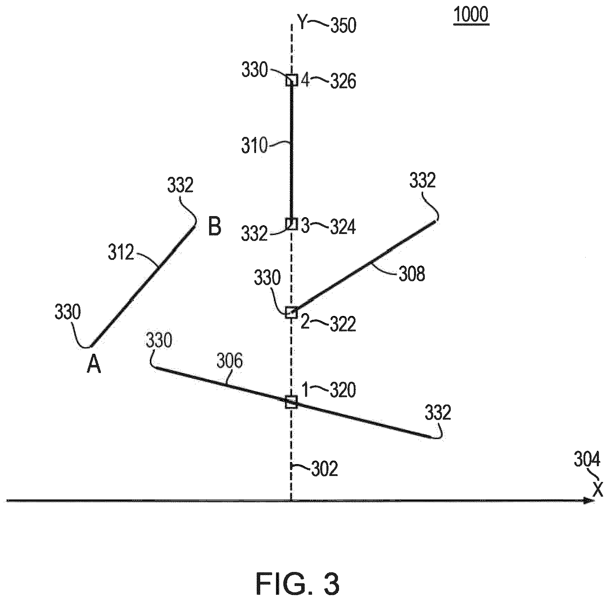

FIG. 3 illustrates a reference line and multiple corresponding segments, as part of crosspoint determination, according to some embodiments. As illustrated in FIG. 3, according to some embodiments, a scanner may "scan" along a reference line 302, thereby detecting various crosspoints 320, 322, 324, and 326, respectively. The scanner may scan along the reference line 302 upward or downward.

As illustrated in FIG. 3, some embodiments of the method (or system) 1000 may determine crosspoints 320, 322, 324, 326 based upon whether segments 306, 308, 310, 312, respectively, having endpoint vertices 330, 332 (in other words, each segment having a start point vertex 330 and end point vertex 332, "endpoint" vertices being defined to include "start point" and "end point" vertices) cross a reference line 302 associated with a given axis 304. Although four segments 306, 308, 310, 312 are illustrated in FIG. 3, embodiments are not so limited, and one to three segments or five or more segments may be applied as described herein.

As illustrated in FIG. 3, crosspoint determination may involve analyzing each segment 306, 308, 310, 312 with respect to a reference line 302 and making one or more of the following determinations of CLEAR, CROSSING, TOUCHING, and/or FOLLOWING. First, as illustrated by segment 312 in FIG. 3, if a segment 312 does not cross a reference line 302, the method (or system) 1000 may determine that the segment 312 and the associated vertices of the segment are in a CLEAR state (e.g., do not cross, touch, or follow the reference line). As such, according to some embodiments, a CLEAR state may not correspond to a crosspoint, but a CROSSING, TOUCHING, and/or FOLLOWING state may correspond to a crosspoint. Next, as illustrated by segment 306 in FIG. 3, the method (or system) 1000 may determine that a segment 306 and the vertex 320 of the segment 306 are crossing the reference line 302 (e.g., in a state of "CROSSING").

Next, as illustrated by segment 308 in FIG. 3, the method (or system) 1000 may determine that a segment 308 and the vertex 322 of the segment 308 are touching the reference line 302 (e.g., in a state of "TOUCHING"). According to some embodiments, a segment 308 is touching a reference line if one of the endpoints 330, 332 of the segment 308 lies on the scanner.

Further, as illustrated by segment 310 in FIG. 3, the method (or system) 1000 may determine that a segment 310 and the segment's corresponding start point vertex 326 and end point vertex 324 are following the reference line (e.g., in a state of "FOLLOWING"). According to some embodiments, a segment 310 is following a reference line if both of the endpoints 330, 332 of the segment 310 lie on the scanner.

According to some embodiments, and as illustrated in FIG. 3, a CLEAR outcome may not produce crosspoints, but outcomes of CROSSING, TOUCHING, and FOLLOWING may produce one or more crosspoints.

Also, according to some embodiments, a priority scheme may be employed as part of Phase 2.2 (determining intersections) as described to herein. In other words, according to some embodiments, the method (or system) 1000 may determine whether any of the vertices of the two-dimensional (2D) real-world shapes along the reference lines are part of a real-world shape that intersects another of the two-dimensional (2D) real-world shapes, and this determination may be based upon a priority order. In the priority order, the "following" state (also known as "FOLLOWING" herein) may be considered higher priority than "crossing" (also known as "CROSSING" herein) and "touching" (also known as "TOUCHING" herein). According to some embodiments, CROSSING may be higher priority than TOUCHING. As such, according to some embodiments, FOLLOWING may have the highest priority in the algorithm of Phase 2.2 to follow.

As illustrated in FIG. 3, As long as reference line is a vertical unbound line, y coordinates 350 of a segment may be ignored, and the result may depend on where x coordinates 304 of endpoints of the segment are located according to the reference line 302.

According to some embodiments, the following pseudo code demonstrates an efficient algorithm of detecting crosspoints, which may include finding a positional relationship of a segment against a vertical line. The result may include a collection of crosspoints for each reference line.

Each crosspoint may be described by a data structure that may include one or more of the following: (1) Shape identifier (ID), (2) Segment identifier (ID), (3) Crosspoint Type including but not limited to: CROSSING, TOUCHING, and/or FOLLOWING (i.e., begin or end), (4) Y coordinate for Crosspoint Type of CROSSING, TOUCHING, and/or FOLLOWING (i.e., begin), and (5) Y coordinate for FOLLOWING (i.e., end) if the type of the crosspoint is FOLLOWING.

The following pseudo-code (Example 2) illustrates detection of crosspoints (Phase 2.1):

### Example 2:

FOREACH segment (in all shapes)
   LET deltaBegin = segment.begin.x - X
   LET deltaEnd = segment.end.x - X
   IF deltaBegin * deltaEnd > 0
      begin and end points on the same side of the reference line
      NOT INTERSECTING
      CONTINUE FROM TOP
   ELSEIF deltaBegin * deltaEnd < 0
      begin and end points on different sides of the reference line
      CROSSING
      According to line equation Ax + By = C, the intersection at
      Y = (segment.C - segment.A * X) / segment.B;
   ELSE
      either deltaBegin, or deltaEnd, or both equal zero
      IF segment.begin.x == segment.end.x
         FOLLOWING reference line
         Begin point: Y1 = MIN(segment.begin.y, segment.end.y)
         End point: Y2 = MAX(segment.begin.y, segment.end.y)
      ELSE
         TOUCHING
         Y = (segment.begin.x == X ? segment.end.x : segment.begin.x)
      ENDIF
   ENDIF
   ADD the crosspoint to the crosspoint collection
ENDLOOP

Using the above-mentioned Example 2 algorithm (of Phase 2.1), crosspoints may be determined. Next, according to some embodiments, the output of Phase 2.1 (crosspoints) may be used as intermediate data (e.g., the output from Phase 2.1 of crosspoint determination may be used as input to Phase 2.2 for determining intersections).

### Phase 2.2. Determining intersections:

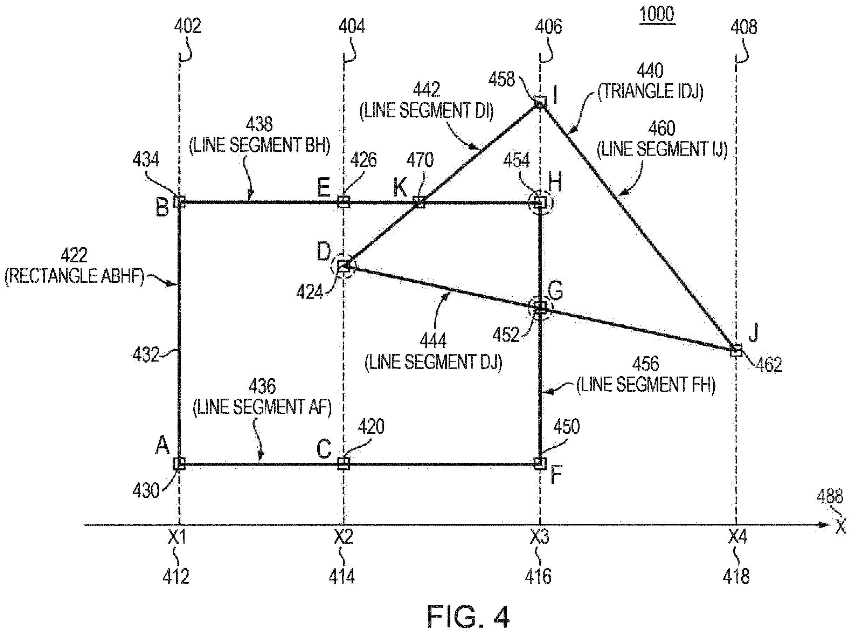

As part of reference line processing, intersections between shapes may be determined based upon the determined crosspoints (also referred to herein as "determining intersections"). According to some embodiments, a crosspoint may include a point on the reference line, where the reference line crosses with one or more segments. FIG. 4, described in more detail to follow, illustrates multiple reference lines, and processing of vertices in parallel, according to some embodiments. FIG. 4 is also described in more detail to follow regarding how intersections are determined.

As part of determining intersections between shapes, some embodiments may include one or more scanners (scanner objects). According to some embodiments, each scanner may include data structures (or data collections, or collections herein), hereinafter referred to as "inShape" (or inShape collection, or inShape data structure herein) and "onShape" (or onShape collection, or onShape data structure herein) associated with each crosspoint. According to some embodiments, for a given crosspoint, inShape may indicate whether the given crosspoint is within a shape (e.g., polygon). According to some embodiments, for a given crosspoint, onShape may indicate whether the given crosspoint is on (the border of) a shape (e.g., polygon). An illustrative example is provided below in reference to the inShape and onShape data structures.

As illustrated in FIG. 4, some embodiments of the method (or system) 1000 may traverse (e.g., walk along) each reference line 412, 414, 416, 418, respectively (shown along x-axis 488 of FIG. 4), from the bottom of the reference line 412, 414, 416, 418 upwards. Such a traversal for the X2 reference line (element 414 of FIG. 4) is described to follow.

As illustrated in FIG. 4 with respect to the X2 reference line (element 414 of FIG. 4), the first crosspoint from the bottom of reference line 414 is vertex C (element 420 of FIG. 4) of type CROSSING (e.g., a crosspoint). Traversing crosspoint 420, the scanner adds vertex C to inShape collection, meaning that the state is "in" ABHF rectangle. Then it reaches inside of the ABHF rectangle 422 and adds vertex D (crosspoint element 424 of FIG. 4) of line segment 444 to the inShape collection, at the same time registering intersection with rectangle 422, because the state is "in" ABHF rectangle 422. Passing again vertex D (crosspoint element 42 of FIG. 4) of line segment 470, previously added vertex D being removed from inShape collection, because it is outside triangle 440. When passing crosspoint E (element 426 of FIG. 4), the scanner moves outside the ABHF rectangle (crossing the rectangle's 422 border a second time), and the method (or system) 1000 removes the previous crosspoint C (element 420), belonging to the ABHF rectangle 422, from inShape, ending the "in" state of inShape for the X2 reference line 414.

In other words, according to some embodiments, the inShape collection may hold lower crosspoints of the shapes that are being crossed into. And, when the scanner moves out of the lower crosspoints (through higher crosspoints), the scanner may remove the shape's lower crosspoint from the inShape collection.

Next, a traversal for the X1 reference line (element 412 of FIG. 4) is described to follow. As also described to follow, traversal along reference line 412 also illustrates usage of the onShape collection. As illustrated in FIG. 4 with respect to reference line 412, the first crosspoint from the bottom is vertex A (element 430 of FIG. 4), which belongs to the line segments AF (element 436) and AB (element 432). According to the priority of crosspoint types (described above), vertex A (element 430 of FIG. 4) in the AF line segment (element 436 of FIG. 4) has a TOUCHING type, which has lower priority, and so it is ignored by the scanner. Considering the crosspoint A (element 430 of FIG. 4) of the AB line segment (element 432 of FIG. 4), the scanner follows the AB line segment (element 432 of FIG. 4), so the scanner may add crosspoint A (element 430 of FIG. 4) of the AB line segment (element 432 of FIG. 4) to the onShape collection, indicating a state of being "on" the segment of rectangle ABHF (element 422 of FIG. 4). Next, the scanner passes crosspoint B (element 434 of FIG. 4), which belongs to two line segments, AB (element 432 of FIG. 4) and BH (element 438 of FIG. 4), respectively. As such, the line segment BH (element 438 of FIG. 4) is ignored by the scanner, because it's cross type TOUCHING has a lower priority than the cross type FOLLOWING of line segment AB (element 432 of FIG. 4), and, as such, the scanner moves outside of the line segment AB (element 432 of FIG. 4). Thus, crosspoint A (element 430 of FIG. 4) is removed from onShape, because the scanner is no longer "on" line segment AB (element 432 of FIG. 4). In other words, according to some embodiments, the onShape collection may hold crosspoints, which may belong to segments that may be followed without crossing into the segments.

According to some embodiments, the onShape collection may temporarily hold crosspoints of TOUCHING classification, such as point A (element 430 of FIG. 4) of line segment AF (element 436 of FIG. 4) and/or point B (element 434 of FIG. 4) of line segment BH (element 438 of FIG. 4). Those are overcome by points A (element 430 of FIG. 4) and B (element 434 of FIG. 4) of line segment AB (element 432 of FIG. 4), having higher priority FOLLOWING, which is then removed from onShape, or ignored.

In other words, according to some embodiments, as the scanner travels through the crosspoints along the reference line from bottom up:
(1) The collection inShape may hold crosspoints of which shape's border is being crossed an odd number of times. So, if inShape is not empty, the current position is inside at least one shape. The shape may be removed from inShape on an even crossing; and/or
(2) The collection onShape may hold data about the shapes, lying on the reference line, so if onShape is not empty, the current position may be on the FOLLOWING segment of such shape. Also, onShape may hold TOUCHING crosspoints which may be removed by following crosspoints, and as such, may be short-lived. To follow, an example of TOUCHING processing is shown with respect to processing of crosspoint D.

According to some embodiments, phase 2.2 may determine one or more intersections. According to some embodiments, intersection points may represent final results of the method (or system) 1000.

Intersection points may have one or more of the following types:
(1) INTERSECTING - two segments of different shapes are intersecting;
(2) INSIDE - endpoint of one shape lies inside another shape;
(3) VERTEXTOUCH - segment endpoint (vertex) of one shape lies on a segment of another shape; and
(4) EDGETOUCH - two vertical segments overlap.

According to some embodiments, the priority scheme of intersection points may rise from INTERSECTING to EDGETOUCH, however, the method (or system) 1000 is not so limited to this priority scheme. In other words, INTERSECTING may have the lowest priority and EDGETOUCH may have the highest priority.

The following pseudo-code produces intersection points. The following pseudo-code (Example 3) illustrates detection of intersections (Phase 2.2):

### Example 3:

SORT crosspoints by y coordinate and crosspoint type in ascending order
// adding sorting by crosspoint type puts TOUCHING points before FOLLOWING according to
// crosspoint's priority, described above,
// which leads to removing TOUCHING point from inShape collection when the next crosspoint
// belongs to the same shape and has the same coordinates, but FOLLOWING type, // like at A, B, F and H of ABHF rectangle on FIG. 4
FOREACH crosspoint (moving up along the reference line) REMOVE TOUCHING points from onShape with y less than current shape's y // according the state (CROSSING, TOUCHING, FOLLOWING) IF TOUCHING IF NOT this shape present in onShape with the same y and intersection type IF different shape present in onShape // crosspoint lies on a segment of that shape ADD VERTEXTOUCH to Results ENDIF IF different shape presents in inShape // crosspoint lies inside that shape // see point D on FIG. 4 ADD INSIDE to Results ENDIF ADD crosspoint to onShape ENDIF IF crosspoint is common for two adjacent segments, having other endpoints on different sides of the reference line (i.e. intersecting the reference line) // moving inside or outside shape IF this shape present in inShape // exiting the shape // see point I on FIG. 4 REMOVE previous point from inShape ELSE // entering shape ADD crosspoint to inShape ENDIF ENDIF ELSEIF CROSSING IF this shape present in inShape // moving out of the shape REMOVE previous crosspoint from inShape ELSE // moving inside shape ADD crosspoint to inShape ENDIF IF this shape present in onShape // see point G on FIG. 4 ADD INTERSECTING to Results ENDIF ELSEIF FOLLOWING begin // see A and F on FIG. 4 REMOVE TOUCHING crosspoint of the same shape from onShape IF different shape present in inShape // crosspoint lies inside that shape ADD INSIDE to Results END IF IF different shape present in onShape // crosspoint lies on a segment of that shape ADD EDGETOUCH to Results END IF ADD crosspoint to onShape ELSEIF FOLLOWING end IF different shape present in inShape // crosspoint lies inside that shape // see H on FIG. 4 ADD INSIDE to Results END IF IF different shape present in onShape // crosspoint lies on a segment of that shape ADD EDGETOUCH to Results END IF REMOVE begin crosspoint from onShape END IF ENDLOOP

According to some embodiments, FIG. 4 illustrates how the scanner of the method (or system) 1000 processes crosspoints to determine intersections between shapes (also referred to as "intersection points" herein). In the non-limiting example embodiment of FIG. 4, the method (or system) 1000 may determine the crosspoints D (element 424), G (element 452), and H (element 454). The following description illustrates how these crosspoints may be determined.

According to some embodiments, as illustrated in FIG. 4, a rectangle (e.g., square) and a triangle may produce four reference lines: X1 through X4 (elements 412, 414, 416, and 418, respectively).

### Reference line X1:

As illustrated in FIG. 4, the method (or system) 1000 may process reference line X1 (element 412). In Phase 2.1 (determining crosspoints), the processing of FIG. 4 results in four crosspoints in total for reference line X1 (element 412). In Phase 2.2 (determining intersections), the processing of FIG. 4 results in no polygon intersections.

As illustrated in FIG. 4, processing reference line X1 results in two crosspoints at vertex A (element 430): the endpoint of line segment AF (element 436) and the endpoint of line segment AB (element 432). The scanner ignores point A (element 430) of line segment AF (element 436), which has TOUCHING type, because point A (element 430) of line segment AB (element 432) has FOLLOWING type, which is higher priority than TOUCHING. The scanner then adds point A (element 430) of line segment AB (element 432) to the onShape collection.

Processing reference line X1 also results in two crosspoints at vertex B (element 434): the endpoint (element 434) of line segment BH (element 438) and the endpoint (element 434) of line segment AB (element 432). The scanner ignores point B (element 434) of line segment BH (element 438), which has TOUCHING type, because point B (element 434) of line segment AB (element 432) has FOLLOWING type, which is higher priority than TOUCHING. As it reaches the end of the FOLLOWING segment (line segment AB, element 432), the scanner finds the beginning of the line segment BH (element 438) and removes point A (element 430) from the onShape collection.

### Reference line X2:

As illustrated in FIG. 4, the method (or system) 1000 may process reference line X2 (element 414). In Phase 2.1 (determining crosspoints), the processing results in four crosspoints in total for reference line X2: (element 414): a crosspoint at vertex C (element 420), two crosspoints at vertex D (element 424), and a crosspoint at vertex E (element 426). In Phase 2.2 (determining intersections), the processing results in a polygon intersection at vertex D (element 424).

Processing reference line X2 (element 414) results in a crosspoint at vertex C (element 420): the crosspoint of the line segment AF (element 436). The crosspoint at vertex C (element 420) has the CROSSING type and there is no other crosspoint of the same rectangle 422 in inShape at this time, which means the reference line X2 (element 414) is crossing into the shape (rectangle 422). The scanner adds point C (element 420) to inShape, so the points that follow point C (element 420) on the reference line X2 (element 414) become intersections, until the second crosspoint (crosspoint E, element 426) of this shape 422 is reached.

Processing reference line X2 (element 414) results in two crosspoints at vertex D (element 424): the endpoints of the line segments DI and DJ (elements 442, 444, respectively), each having the TOUCHING cross type. Next, the scanner realizes that the inShape collection is not empty, so vertex D (element 424) becomes an INSIDE intersection point. Then, the scanner adds point D (element 424) of line segment DJ (element 444) to the onShape collection. Next, the scanner comes to point D (element 424) of line segment DI (element 442) and discovers that point D (element 424) of line segment DJ (element 444) is already in onShape, so the scanner removes point D (element 424) of line segment DJ (element 444) from onShape, because both of the line segments DI and DJ (element 442, 444, respectively) belong to the same shape (triangle IDJ, element 440).

Processing reference line X2 (element 414) results in a crosspoint at vertex E (element 426): the crosspoint of the line segment BH (element 438). The scanner finds the shape (rectangle ABHF, element 422) in inShape (point C, element 420), which means the inShape state is "inside" the rectangle ABHF (element 422) and then changes to "outside" of the rectangle ABHF (element 422), so the scanner removes point C (element 420) from inShape. The onShape collection is then empty, so point C (element 420) does not become an intersection point.

### Reference line X3:

As illustrated in FIG. 4, the method (or system) 1000 may process reference line X3 (element 416). In Phase 2.1 (determining crosspoints), the processing of FIG. 4 results in 7 crosspoints in total for reference line X3 (element 416): two crosspoints at vertex F (element 450), a crosspoint at vertex G (element 452), two crosspoints at vertex H (element 454), and two crosspoints at vertex I (element 458). In Phase 2.2 (determining intersections), the processing of FIG. 4 results in two polygon intersections: vertex G (element 452) and vertex H (element 454), respectively.

Processing reference line X3 (element 416) results in two crosspoints at vertex F (element 450): the endpoints of line segments AF and FH (elements 436, and 456, respectively). The scanner ignores point F (element 450) of line segment AF (element 436), which has TOUCHING type, because point F (element 450) in line segment FH (element 456) has the FOLLOWING cross type, which is higher priority than the TOUCHING cross type. The scanner adds point F (element 450) of line segment FH (element 456) to the onShape collection. In other words, the points (elements 452 and 454) that follow F (element 450) on reference line X3 (element 416) until point H (element 454) is reached are intersections (also known as "intersection points" herein).

Processing reference line X3 (element 416) results in a crosspoint at vertex G (element 452) of line segment DJ (element 444). The scanner recognizes vertex G (element 452) as an intersection point because the onShape collection is not empty. Next, the scanner adds vertex G (element 452) to the inShape collection (for triangle IDJ, element 440), because the scanner scans along reference line X3 (element 416) into the IDJ triangle (element 440). Next, until the crosspoint for vertex I (element 458) is reached, other crosspoints not belonging to IDJ triangle (element 440) become intersections (namely, elements 452 and 454).

Processing reference line X3 (element 416) results in two crosspoints of vertex H (element 454), namely the endpoint of the BH line segment (element 438) and the endpoint of the FH line segment (element 456). The scanner ignores point H (element 454) of line segment BH (element 438), which has the TOUCHING cross type because there is higher priority point H (element 454), belonging to the FH line segment (element 456) of FOLLOWING cross type. Point H (element 454) is an intersection point because the inShape collection includes point G (element 452), which belongs to the shape IDJ (element 440). The scanner removes point H (element 454) from the onShape collection because point H (element 454) is at the end of the FH line segment (element 456) of FOLLOWING cross type.

Processing reference line X3 (element 416) results in two crosspoints of vertex I (element 458), namely the endpoint of the DI line segment (element 442) and the endpoint of the IJ line segment (element 460). The scanner finds the triangle shape IDJ (element 440) in the inShape collection (associated with point G, element 452) and removes G (element 452) from the inShape collection. The onShape collection is empty, so point I (element 458) is not an intersection point.

### Reference line X4:

As illustrated in FIG. 4, the method (or system) 1000 may process reference line X4 (element 418). In Phase 2.1 (determining crosspoints), the processing of FIG. 4 results in two crosspoints in total for reference line X4 (element 418): the endpoints of line segments DJ and IJ (elements 444 and 460, respectively). In Phase 2.2 (determining intersections), the processing of FIG. 4 results in no polygon intersections.

The scanner adds point J (element 462) of line segment DJ (element 444) to the inShape collection, and removes point J (element 462) from the inShape collection, because the next point (the point J, element 462, of the line segment IJ, element 460) belongs to the same shape (triangle IDJ, element 440) for both line segments DJ (element 444) and IJ (element 460). The onShape collection is empty, so point J (element 462) is not an intersection point.

### Phase 3 - Reference line collection: (preferably sequential, but not so limited)

In some embodiments, the method (or system) 1000 may collect results that may include one or more intersection points.

Pseudo-code for results collection is illustrated in Example 4 as follows:

### Example 4:

FOREACH reference line
   MOVE Results to global Results collection
ENDLOOP

As illustrated in FIG. 4, according to some embodiments, by applying the pseudo-code of Example 4, the method (or system) 1000 may produce (e.g., generate) one or more of the following three intersection points: (1) vertex D (element 424 of FIG. 4) of triangle IDJ (element 440 of FIG. 4) inside of rectangle ABHF (element 422 of FIG. 4); (2) vertex G (element 452 of FIG. 4) which crosses the edges of triangle IDJ (element 440 of FIG. 4) and rectangle ABHF (element 422 of FIG. 4); and (3) the vertex H (element 454 of FIG. 4) of rectangle ABHF (element 422 of FIG. 4) inside of triangle IDJ (element 440 of FIG. 4).

According to some embodiments, point K (element 470 of FIG. 4) is preferably not included in the results collection, and is preferably not discovered by the algorithm, because point K (element 470 of FIG. 4) does not belong to a reference line. However, the method (or system) 1000 is not so limited. According to some embodiments, if such points as point K (element 470 of FIG. 4) are a subject of interest, results may be queried for intersecting segments and such points (as point K, element 470) calculated.

### Phase 4 - Post-processing of results: (parallel or sequential)

According to some embodiments, the method (or system) 1000 may post-process the collected results using any approach known to one skilled in the art.

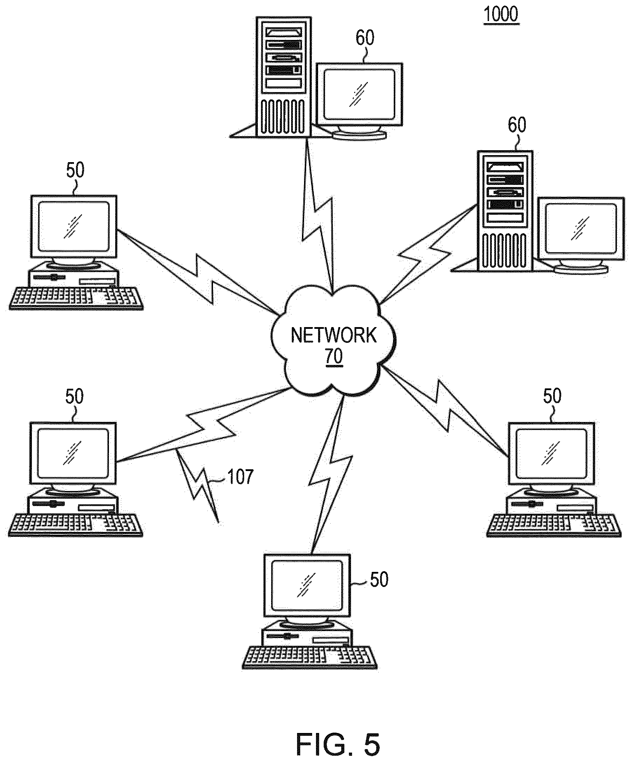

FIG. 5 illustrates a computer network (or system) 1000 or similar digital processing environment, for determining intersections among a plurality of two-dimensional (2D) real-world shapes, according to some embodiments. Client computer(s)/devices 50 and server computer(s) 60 provide processing, storage, and input/output devices executing application programs and the like. The client computer(s)/devices 50 can also be linked through communications network 70 to other computing devices, including other client devices/processes 50 and server computer(s) 60. The communications network 70 can be part of a remote access network, a global network (e.g., the Internet), a worldwide collection of computers, local area or wide area networks, and gateways that currently use respective protocols (TCP/IP, Bluetooth®, etc.) to communicate with one another. Other electronic device/computer network architectures are suitable.

Client computers/devices 50 may be configured with a computing module (located at one or more of elements 50, 60, and/or 70). In some embodiments, a user may access the computing module executing on the server computers 60 from a user device, such a mobile device, a personal computer, or any computing device known to one skilled in the art without limitation. According to some embodiments, the client devices 50 and server computers 60 may be distributed across a computing module.

Server computers 60 may be configured as the computing modules which communicate with client devices 50 for providing access to (and/or accessing) databases that include data representing the two-dimensional (2D) real-world shapes. The server computers 60 may not be separate server computers but part of cloud network 70. In some embodiments, the server computer (e.g., computing module) may enable users to determining intersections among a plurality of two-dimensional (2D) real-world shapes by allowing access to data located on the client 50, server 60, or network 70 (e.g., global computer network). The client (configuration module) 50 may communicate data representing the two-dimensional (2D) real-world shapes back to and/or from the server (computing module) 60. In some embodiments, the client 50 may include client applications or components executing on the client 50 for determining intersections among a plurality of two-dimensional (2D) real-world shapes, and the client 50 may communicate corresponding data to the server (e.g., computing module) 60.

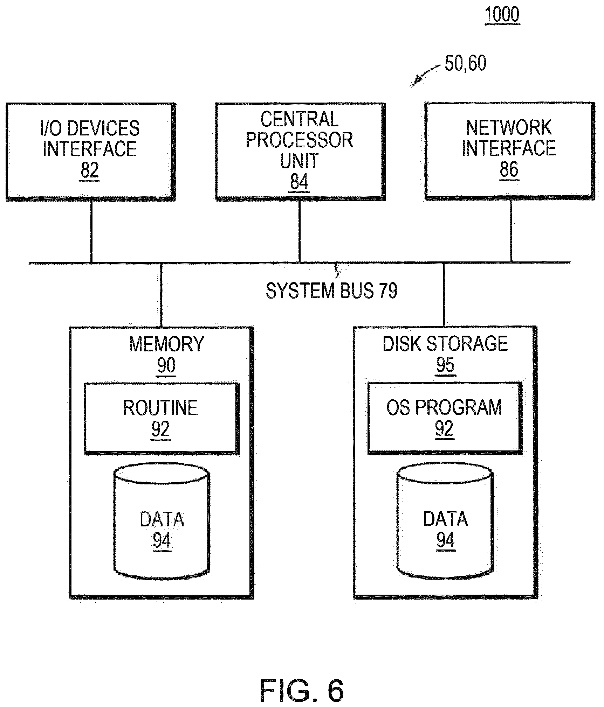

Some embodiments of the system 1000 may include a computer system for determining intersections among a plurality of two-dimensional (2D) real-world shapes. The system 1000 may include a plurality of processors 84. The system 1000 may also include a memory 90. The memory 90 may include: (i) computer code instructions stored thereon; and/or (ii) data representing the two-dimensional (2D) real-world shapes. The data may include segments including portions of the two-dimensional (2D) real-world shapes. The segments may represent start point and end point vertices of the portions of the two-dimensional (2D) real-world shapes. The memory 90 may be operatively coupled to the plurality of processors 84 such that, when executed by the plurality of processors 84, the computer code instructions may cause the computer system 1000 to implement a computing module (the computing module being located on, in, or implemented by any of elements 50, 60, 70 of FIG. 5 or elements 82, 84, 86, 90, 92, 94, 95 of FIG. 6) configured to perform one or more functions. The computing module may define a plurality of reference lines. Each reference line may intersect at least one of the vertices along a given axis. The computing module may process the reference lines in parallel by classifying the vertices of the two-dimensional (2D) real-world shapes along the reference lines. The computing module may determine, based on the classifying, whether any of the vertices of the two-dimensional (2D) real-world shapes along the reference lines are part of a real-world shape that intersect another of the two-dimensional (2D) real-world shapes.

According to some embodiments, FIG. 6 is a diagram of an example internal structure of a computer (e.g., client processor/device 50 or server computers 60) in the computer system 1000 of FIG. 5. Each computer 50, 60 contains a system bus 79, where a bus is a set of hardware lines used for data transfer among the components of a computer or processing system. The system bus 79 is essentially a shared conduit that connects different elements of a computer system (e.g., processor, disk storage, memory, input/output ports, network ports, etc.) that enables the transfer of information between the elements. Attached to the system bus 79 is an I/O device interface 82 for connecting various input and output devices (e.g., keyboard, mouse, displays, printers, speakers, etc.) to the computer 50, 60. A network interface 86 allows the computer to connect to various other devices attached to a network (e.g., network 70 of FIG. 5). Memory 90 provides volatile storage for computer software instructions 92 and data 94 used to implement some embodiments (e.g., multiuser site, configuration module, and/or administration module engine elements described herein). Disk storage 95 provides non-volatile storage for computer software instructions 92 and data 94 used to implement an embodiment of the present disclosure. A central processor unit 84 is also attached to the system bus 79 and provides for the execution of computer instructions.

In one embodiment, the processor routines 92 and data 94 are a computer program product (generally referenced 92), including a computer readable medium (e.g., a removable storage medium such as one or more DVD-ROM's, CD-ROM's, diskettes, tapes, etc.) that provides at least a portion of the software instructions for the invention system. The computer program product 92 can be installed by any suitable software installation procedure, as is well known in the art. In another embodiment, at least a portion of the software instructions may also be downloaded over a cable, communication and/or wireless connection. In other embodiments, the invention programs are a computer program propagated signal product 107 (of FIG. 5) embodied on a propagated signal on a propagation medium (e.g., a radio wave, an infrared wave, a laser wave, a sound wave, or an electrical wave propagated over a global network such as the Internet, or other network(s)). Such carrier medium or signals provide at least a portion of the software instructions for the present invention routines/program 92.

In alternate embodiments, the propagated signal is an analog carrier wave or digital signal carried on the propagated medium. For example, the propagated signal may be a digitized signal propagated over a global network (e.g., the Internet), a telecommunications network, or other network. In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of computer program product 92 is a propagation medium that the computer system 50 may receive and read, such as by receiving the propagation medium and identifying a propagated signal embodied in the propagation medium, as described above for computer program propagated signal product.

Generally speaking, the term "carrier medium" or transient carrier encompasses the foregoing transient signals, propagated signals, propagated medium, storage medium and the like.

Embodiments or aspects thereof may be implemented in the form of hardware (including but not limited to hardware circuitry), firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, hardware, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and, thus, the data processors described herein are intended for purposes of illustration only and not as a limitation of the embodiments.

While this disclosure has been particularly shown and described with references to example embodiments thereof, it will be understood by those skilled in the art that various changes in form and details may be made therein without departing from the scope of the disclosure encompassed by the appended claims.

Some embodiments may provide one or more technical advantages that may transform the behavior and/or data, provide functional improvements, and/or solve a technical problem. In some embodiments, technical advantages (and/or functional improvements) may include but are not limited to improvement of efficiency, accuracy, speed or other effect compared to the existing methods. Some embodiments provide technical advantages (and/or functional improvements) in that they overcome functional deficiencies of existing methods. Some embodiments include technical advantages that include but are not limited to performance improvement and/or scalability (e.g., efficient use of PU's). Other technical advantages (and/or functional improvements) of some embodiments include the creation of a result dataset that is suitable for execution of queries including but not limited to the following queries: whether intersections exist, whether intersections of a certain type exist, whether one shape intersects with another shape, and/or what shapes intersect with a given shape.

According to some embodiments, other technical advantages (and/or functional improvements) include the ability to handle queries and/or determine at least the following: whether a shape intersects with another shape, and what shapes intersect with a given shape.

Some embodiments may transform the data representing the two-dimensional (2D) real-world shapes by determining intersections among a plurality of two-dimensional (2D) real-world shapes associated with the data. The data may include segments including portions of the two-dimensional (2D) real-world shapes. The segments may represent start point and end point vertices of the portions of the two-dimensional (2D) real-world shapes.

Some embodiments solve a technical problem (thereby providing a technical effect) by determining intersections among a plurality of two-dimensional (2D) real-world shapes. Existing approaches may involve thousands to hundreds of thousands of 3D modeling operations, like Boolean unite, using models created from 2D input data. Existing approaches can take minutes to hours and involve invalid input data, resulting in invalid results. The workflow could not evaluate the input. In stark contrast with existing approaches, the embodiments presented herein not only solve a technical problem (thereby providing a technical effect), but also provide a technical advantage (and/or functional improvement) in that checking data using some embodiments may take milliseconds or seconds on very large datasets, and may determine whether the data is valid. In addition to providing a technical advantage of validating input data, some embodiments may also provide the technical advantage (and/or functional improvement) of not only producing datasets that include information regarding intersection of shapes.

## Claims

1. A method of determining intersections among a plurality of two-dimensional (2D) real-world shapes, data representing the shapes including segments of the 2D real-world shapes having start point and end point vertices, the method comprising:
defining a plurality of reference lines, each reference line intersecting at least one of the vertices along a given axis;
processing the reference lines in parallel by classifying the vertices of the two-dimensional (2D) real-world shapes along the reference lines; and
based on the classifying, determining whether any of the vertices of the two-dimensional (2D) real-world shapes along the reference lines are part of a real-world shape that intersects another of the two-dimensional (2D) real-world shapes.

2. The method of Claim 1, wherein the two-dimensional (2D) real-world shapes include real-world polygons.

3. The method of Claim 1, wherein the real-world shape is inside of or touching the other of the two-dimensional (2D) real-world shapes.

4. The method of Claim 1, wherein the two-dimensional (2D) real-world shapes are components of at least one of: printed circuit boards and digital computer images.

5. The method of Claim 1, wherein classifying the vertices of the two-dimensional (2D) real-world shapes along the reference lines includes:
determining, for each vertex along a given reference line, whether the segments associated with the vertex are crossing, touching, or following the reference line by comparing locations of the reference line and the start point and end point vertices of the segments.

6. The method of Claim 1, wherein determining whether any of the vertices of the two-dimensional (2D) real-world shapes along the reference lines that are the part of a real-world shape that intersect the another of the two-dimensional (2D) real-world shapes includes:
determining whether a plurality of the segments overlap;
further determining whether a plurality of the segments of different shapes of the two-dimensional (2D) real-world shapes overlap;
further determining whether an endpoint vertex of a given segment of the segments lies inside of the another of the two-dimensional (2D) real-world shapes; and
further determining whether an endpoint vertex of a given segment of the segments lies on the another of the two-dimensional (2D) real-world shapes.

7. The method of Claim 1, wherein the given axis is a horizontal axis or a vertical axis.

8. The method of Claim 1, wherein determining whether any of the vertices of the two-dimensional (2D) real-world shapes along the reference lines are part of a real-world shape that intersect the another of the two-dimensional (2D) real-world shapes includes determining whether each segment of the segments connected to each reference line of the reference lines is crossing, touching, or following each reference line.

9. The method of Claim 8, wherein determining whether any of the vertices of the two-dimensional (2D) real-world shapes along the reference lines are part of a real-world shape that intersect the another of the two-dimensional (2D) real-world shapes is based upon a priority order, the following being considered higher priority than the crossing and the touching.

10. A computer system for determining intersections among a plurality of two-dimensional (2D) real-world shapes, the system comprising:
a plurality of processors; and
memory including (i) computer code instructions stored thereon and (ii) data representing the two-dimensional (2D) real-world shapes, the data including segments including portions of the two-dimensional (2D) real-world shapes, the segments representing start point and end point vertices of the portions of the two-dimensional (2D) real-world shapes, the memory operatively coupled to the plurality of processors such that, when executed by the plurality of processors, the computer code instructions cause the computer system to implement a computing module configured to perform the method of any one of Claims 1 to 9.

11. The system of Claim 10, wherein each processor processes a subset of the reference lines, and wherein the segments are stored as read-only in the memory.

12. A computer program comprising instructions for performing the method of any one of Claims 1 to 9.

13. A non-transitory computer readable medium having stored thereon a sequence of instructions which, when loaded and executed by a processor coupled to an apparatus, causes the apparatus to perform the method of any one of Claims 1 to 9.
